# EUROPEAN PATENT APPLICATION

(11) **EP 4 368 489 A1**
(43) Date of publication of application: **15.05.2024**
(21) Application number: 21949452.3
(22) Date of filing: 24.12.2021
(51) Int. Cl.: B63B 25/16, B63H 21/38, B63B 17/00, F17C 6/00, F17C 9/02

(54) **SYSTEM AND METHOD FOR RELIQUEFYING BOIL-OFF GAS OF VESSEL**

(30) Priority: 06.07.2021 KR 20210088328
(71) Applicant: Hanwha Ocean Co., Ltd., Geoje-si, Gyeongsangnam-do 53302 (KR)
(72) Inventor: LEE, Joon Chae, Seoul 04557 (KR); CHOI, Won Jae, Siheung-si Gyeonggi-do 15022 (KR); CHOI, Dong Kyu, Seongnam-si Gyeonggi-do 13489 (KR)
(74) Representative: Cabinet Beau de Loménie
(86) International application number: PCT/KR2021/019889
(87) International publication number: WO 2023/282415

(57) **Abstract**

A system and method for reliquefying boil-off gas of a vessel are disclosed. The system for reliquefying boil-off gas includes: a compressor provided to the vessel and compressing boil-off gas generated in a storage tank storing liquefied gas; a reliquefaction line extending from the compressor to the storage tank and reliquefying compressed gas to deliver reliquefied gas to the storage tank; a heat exchanger provided to the reliquefaction line and receiving and cooling the compressed gas; a first refrigerant compression part compressing a refrigerant discharged from the heat exchanger after cooling the compressed gas; a second refrigerant compression part further compressing the refrigerant compressed in the first refrigerant compression part; and a refrigerant expansion part expanding and cooling the refrigerant compressed through the first and second refrigerant compression parts and supplying the refrigerant to the heat exchanger, wherein the refrigerant compressed through the first and second refrigerant compression parts is pre-cooled in the heat exchanger, expanded and cooled in the refrigerant expansion part, and supplied as a cold heat source to the heat exchanger, and wherein the first refrigerant compression part or the second refrigerant compression part is driven by expansion energy of the refrigerant delivered from the refrigerant expansion part.

## Description

### [Technical Field]

The present invention relates to a system and method for reliquefying boil-off gas (BOG) generated from liquefied gas stored in a storage tank of a vessel and returning the reliquefied BOG to the storage tank.

### [Background Art]

Natural gas contains methane as a main component and has been attracting attention as an eco-friendly fuel that emits little or no environmental pollutants during combustion. Liquefied natural gas (LNG) is obtained by liquefying natural gas through cooling to about -163°C under normal pressure and is very suitable for long-distance transportation by sea since its volume is reduced to about 1/600^{th} that of natural gas in a gaseous state. Accordingly, natural gas is mainly stored and transported as liquefied natural gas, which is easy to store and transport.

Since natural gas is liquefied at a cryogenic temperature of about -163°C under normal pressure, LNG storage tanks are typically insulated to maintain LNG in a liquid state. However, even though the LNG storage tanks are insulated, such storage tanks are limited in ability to block external heat. Accordingly, since external heat is continuously transferred to the LNG storage tank, LNG stored in the LNG tank continues to evaporate naturally during transportation, causing generation of boil-off gas (BOG).

Continuous production of boil-off gas in the LNG storage tank increases the internal pressure of the LNG storage tank. If the internal pressure of the storage tank exceeds a predetermined safe pressure, this can cause an emergency situation, such as rupture of the storage tank. Accordingly, there is a need to discharge boil-off gas from the storage tank using a safety valve. However, boil-off gas is a kind of LNG loss and is an important issue for transportation efficiency and fuel efficiency of LNG. Therefore, various methods are employed to handle boil-off gas generated in the LNG storage tank.

Recently, a method of using boil-off gas at a fuel demand site, such as an engine of a vessel, a method of reliquefying boil-off gas and returning the reliquefied boil-off gas to an LNG storage tank, and a method combining these two approaches have been developed and put into use.

### [Disclosure]

### [Technical Problem]

In application of a reliquefaction cycle for reliquefaction of boil-off gas to a vessel, liquefaction methods typically used in the art include, for example, processes using an SMR cycle and a C3MR cycle. The C3MR cycle (Propane-precooled Mixed Refrigerant Cycle) is a process in which natural gas is cooled using a single propane refrigerant and is then liquefied and subcooled using a mixed refrigerant, and the SMR cycle (Single Mixed Refrigerant Cycle) is a process in which natural gas is liquefied using a mixed refrigerant consisting of multiple components.

Since both the SMR cycle and the C3MR cycle employ a mixed refrigerant and can have a problem of deterioration in liquefaction efficiency when the composition of the mixed refrigerant is changed due to leakage of the refrigerant as the liquefaction process proceeds, it is necessary to maintain the composition of the refrigerant by continuously measuring the composition of the mixed refrigerant and replenishing a deficient refrigerant component.

An alternative method for reliquefaction of boil-off gas through a reliquefaction cycle is a single cycle liquefaction process using nitrogen refrigerant.

Although the cycle using the nitrogen refrigerant has lower efficiency than the cycles using a mixed refrigerant, the nitrogen refrigerant has an advantage of being easy to apply to vessels because it is high safety due to inert properties thereof and there is no phase change when used as a refrigerant.

The present invention proposes a system that can construct equipment without any restriction even when boil-off gas to be reliquefied changes from a low flow rate to a high flow rate in a reliquefaction cycle utilizing a separate refrigerant, and can efficiently adjust the load of the reliquefaction system.

### [Technical Solution]

In accordance with one aspect of the present invention, a boil-off gas reliquefaction system for a vessel includes: a compressor provided to the vessel and compressing boil-off gas generated in a storage tank storing liquefied gas;
a reliquefaction line extending from the compressor to the storage tank and reliquefying compressed gas to deliver reliquefied gas to the storage tank;
a heat exchanger provided to the reliquefaction line and receiving and cooling the compressed gas;
a first refrigerant compression part compressing a refrigerant discharged from the heat exchanger after cooling the compressed gas;
a second refrigerant compression part further compressing the refrigerant compressed in the first refrigerant compression part; and
a refrigerant expansion part expanding and cooling the refrigerant compressed through the first and second refrigerant compression parts and supplying the refrigerant to the heat exchanger,
wherein the refrigerant compressed through the first and second refrigerant compression parts is pre-cooled in the heat exchanger, expanded and cooled in the refrigerant expansion part, and supplied as a cold heat source to the heat exchanger, and
wherein the first refrigerant compression part or the second refrigerant compression part is driven by expansion energy of the refrigerant delivered from the refrigerant expansion part.

Four streams may be heat exchanged in the heat exchanger, the four streams including a stream of uncompressed boil-off gas to be supplied from the storage tank to the compressor, a stream of the compressed gas through the compressor, a stream of the refrigerant compressed through the first and second refrigerant compression parts, and a stream of the refrigerant expanded and cooled through the refrigerant expansion part.

The second refrigerant compression part may be driven by expansion energy of the refrigerant delivered from the refrigerant expansion part to compress the refrigerant.

The first refrigerant compression part may be driven by expansion energy of the refrigerant delivered from the refrigerant expansion part to compress the refrigerant.

The boil-off gas reliquefaction system may further include: a refrigerant circulation line to which the first and second refrigerant compression parts and the refrigerant expansion part are provided and in which the refrigerant supplied to the heat exchanger circulates; and a refrigerant inventory part supplying the refrigerant circulating in the refrigerant circulation line.

The boil-off gas reliquefaction system may further include: a refrigerant supply line extending from the refrigerant inventory part to an upstream side of the first refrigerant compression part of the refrigerant circulation line to replenish the refrigerant to the refrigerant circulation line; and a refrigerant discharge line extending from a downstream side of the second refrigerant compression part of the refrigerant circulation line to the refrigerant inventory part to discharge the refrigerant of the refrigerant circulation line.

A load of a reliquefaction cycle may be adjusted by replenishing the refrigerant to the refrigerant circulation line through the refrigerant supply line upon increase in amount of the compressed gas to be reliquefied, and discharging the refrigerant from the refrigerant circulation line through the refrigerant discharge line upon decrease in amount of the compressed gas to be reliquefied.

The boil-off gas reliquefaction system may further include: a boil-off gas supply line extending from the storage tank to the compressor through the heat exchanger; and a preheater branched upstream of the heat exchanger in the boil-off gas supply line to heat all or part of the boil-off gas and supply the heated boil-off gas to an upstream side of the heat exchanger in the boil-off gas supply line.

The boil-off gas compressed in the compressor may be supplied as fuel to an engine or generator of the vessel and the boil-off gas not suppled as fuel may be reliquefied through the reliquefaction line.

In accordance with another aspect of the present invention, there is provided a boil-off gas reliquefaction method of a vessel, comprising; compressing a boil-off gas generated from an on-board storage tank in a compressor; and cooling a compressed gas through heat exchange with a refrigerant in a heat exchanger to re-liquefy,

wherein the refrigerant discharged from the heat exchanger after cooling the compressed gas is compressed through a first refrigerant compression part and a second compression part, is pre-cooled in the heat exchanger, is expanded and cooled in a refrigerant expansion part, and is circulated back as a cold heat source to the heat exchanger, and

wherein the first refrigerant compression part or the second refrigerant compression part is driven by expansion energy of the refrigerant delivered from the refrigerant expansion part.

Four streams may be heat exchanged in the heat exchanger, the four streams including a stream of uncompressed boil-off gas to be supplied from the storage tank to the compressor, a stream of the compressed gas through the compressor, a stream of the refrigerant compressed through the first and second refrigerant compression parts, and a stream of the refrigerant expanded and cooled through the refrigerant expansion part.

A load of a reliquefaction cycle may be adjusted by replenishing the refrigerant from a refrigerant inventory part to an upstream side of the first refrigerant compression part upon increase in amount of the compressed gas to be reliquefied, and discharging the refrigerant from a downstream side of the second refrigerant compression part to the refrigerant inventory part upon decrease in amount of compressed gas to be reliquefied.

### [Advantageous Effects]

The boil-off gas reliquefaction system according to the present invention enables construction of equipment without any restriction even when boil-off gas to be re-liquefied changes from a low flow rate to a high flow rate in a reliquefaction cycle employing a separate refrigerant and can be designed for low capacity while enabling increase in capacity by constructing equipment units in parallel or replacing each equipment unit through individual increase in size of each equipment unit when a large capacity refrigerant cycle is required. Redundancy required by a vessel can be optionally considered for each equipment unit, thereby enabling cost reduction. In addition, power consumption for refrigerant compression can be reduced by utilizing refrigerant expansion energy of the refrigerant expansion part.

In addition, the load of the reliquefaction cycle can be efficiently adjusted by replenishing or discharging a refrigerant according to requirement for cold heat of the reliquefaction system.

### [Description of Drawings]

FIG. 1 is a schematic diagram of a boil-off gas reliquefaction system of a vessel according to a first embodiment of the present invention.

FIG. 2 is a schematic diagram of a boil-off gas reliquefaction system of a vessel according to a second embodiment of the present invention.

### [Best Mode]

In order to fully appreciate the operational advantages of the present invention and the objectives achieved by practicing the present invention, reference should be made to the accompanying drawings, which illustrate exemplary embodiments of the present invention, and description thereof.

Hereinafter, exemplary embodiments of the present invention will be described in detail in terms of the features and effects thereof with reference to the accompanying drawings. It should be noted that like components will be denoted by like reference numerals throughout the specification and the accompanying drawings.

As used herein, the term "vessel" may refer to any type of vessel provided with a storage tank for storing liquefied gas. For example, the vessel may include self-propelled vessels, such as an LNG carrier, an LNG bunkering vessel, a liquid hydrogen carrier, and an LNG regasification vessel (RV), as well as non-self-propelled floating offshore structures, such as an LNG floating production, storage and offloading (FPSO) unit and an LNG floating storage regasification unit (FSRU).

In addition, embodiments of the present invention may be applied to a reliquefaction cycle of any type of liquefied gas that can be liquefied to low temperature to be transported and can produce boil-off gas in a stored state. For example, such liquefied gas may include liquefied petrochemical gas, such as liquefied natural gas (LNG), liquefied ethane gas (LEG), liquefied petroleum gas (LPG), liquefied ethylene gas, liquefied propylene gas, and the like. In the following embodiments, by way of example, the present invention will be described as using LNG which is a typical liquefied gas.

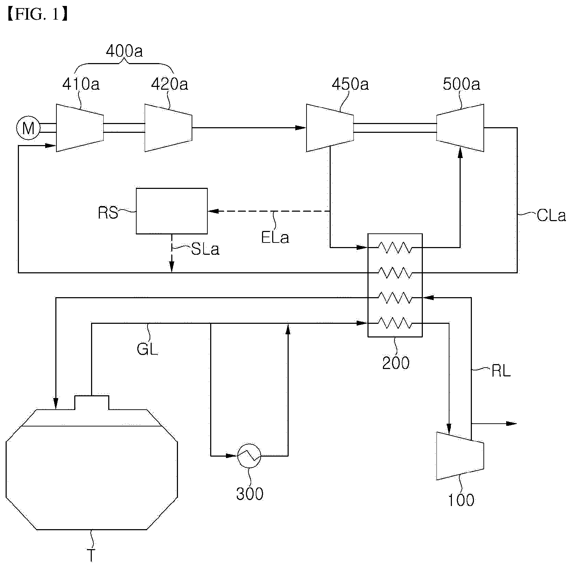

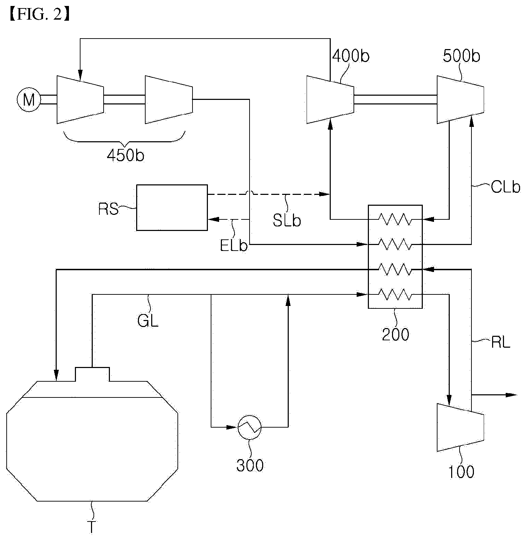

FIG. 1 is a schematic diagram of a boil-off gas reliquefaction system of a vessel according to a first embodiment of the present invention and FIG. 2 is a schematic diagram of a boil-off gas reliquefaction system of a vessel according to a second embodiment of the present invention.

A reliquefaction system according to embodiments of the present invention compresses and cools boil-off gas generated from liquefied gas stored in a storage tank T of a vessel to reliquefy and return the reliquefied gas to the storage tank, and includes a compressor 100 compressing the boil-off gas and a heat exchanger 200 cooling the compressed boil-off gas. Although not shown in the drawings, the reliquefaction system may further include a decompressor (not shown) that depressurizes the boil-off gas cooled through the heat exchanger, a gas-liquid separator (not shown) that separates the boil-off gas depressurized in the decompressor, and the like.

The compressor 100 compresses the boil-off gas delivered from the storage tank along a boil-off gas supply line GL such that the boil-off gas can be compressed to a fuel supply pressure of engines or generators (not shown) of the vessel. For example, the boil-off gas may be compressed to 5.5 barg with DF engines, 15 barg with X-DF engines, and 300 barg with ME-GI engines. The compressed boil-off gas may be supplied as fuel for the engines or generators (not shown) of the vessel, and the boil-off gas not supplied as fuel may be introduced into the heat exchanger 200 along a reliquefaction line RL such that the boil off gas can be cooled and reliquefied in the heat exchanger 200.

The boil-off gas cooled by the heat exchanger 200 while passing therethrough may be further cooled through adiabatic expansion or isentropic expansion in the decompressor and may be subjected to gas-liquid separation in the gas-liquid separator to be returned to the storage tank.

When the reliquefaction system that has been interrupted is started up and cryogenic boil-off gas having a temperature in the range of -130°C to -100°C is introduced from the storage tank into the heat exchanger at room temperature at the beginning of startup, or into the heat exchanger that has not been sufficiently cooled down, significant thermal stress can be applied to the heat exchanger, causing device damage to the heat exchanger. To solve this problem, according to the embodiments of the invention, a line is branched from the boil-off gas supply line GL upstream of the heat exchanger 200 to heat all or part of the boil-off gas and supply the heated boil-off gas to an upstream side of the heat exchanger in the boil-off gas supply line GL, and a preheater 300 for heating the boil-off gas is provided to the branched line to minimize thermal stress on the heat exchanger while preventing device damage.

Even upon normal operation of the reliquefaction system, all or part of the boil-off gas supplied from the storage tank to the compressor may be introduced into the heat exchanger through the preheater 300, as needed, if there is a concern of thermal stress on the heat exchanger through change in temperature of the boil-off gas due to change in condition of the storage tank.

The refrigerant cycle has a configuration in which a refrigerant circulates to cool the boil-off gas in the heat exchanger 100, and the heat exchanger according to the embodiments of the invention cools compressed boil-off gas (RL) using the refrigerant circulating in the refrigerant cycle (CLa; CLb) and uncompressed boil-off gas GL introduced from the storage tank to the compressor as cold heat sources.

The refrigerant supplied to the heat exchanger while circulating in the refrigerant circulation lines CLa; CLb may be, for example, nitrogen (N₂).

The refrigerant cycle includes the refrigerant circulation line CLa; CLb in which the refrigerant circulates, first and second refrigerant compression parts 400a, 450a; 400b, 450b provided to the refrigerant circulation line to compress and further compress the refrigerant discharged from the heat exchanger after cooling the boil-off gas, and a refrigerant expansion part 500a; 500b that expands and cools the refrigerant cooled through the heat exchanger after being compressed in the first and second refrigerant compression parts and supplies the expanded and cooled refrigerant to a cold heat source in the heat exchanger. Since the refrigerant compressed in the first and second refrigerant compression parts is pre-cooled through the heat exchanger and then expanded and cooled in the refrigerant expansion part to be circulated as a refrigerant of the heat exchanger, four streams including a stream of the compressed gas from the compressor, a stream of uncompressed boil-off gas to be introduced into the compressor, a stream of the refrigerant expanded and cooled in the expansion cooling part, and a stream of the refrigerant compressed in the first and second refrigerant compression parts are heat exchanged in the heat exchanger.

In some embodiments, the refrigerant expansion part is axially connected to either the first or second refrigerant compression part such that expansion energy of the refrigerant can be used to compress the refrigerant.

In the first embodiment shown in FIG. 1, the second refrigerant compression part 450a, which further compresses the refrigerant compressed in the first refrigerant compression part 400a, is driven by receiving the expansion energy of the refrigerant from the refrigerant expansion part 500a. The remaining first refrigerant compression part 400a may be driven by receiving energy, i.e., electric power, from an external source. Optionally, the first refrigerant compression part 400a may include a plurality of compressors 410a, 420b.

As such, with the separate configurations of the first refrigerant compression part 400a driven by external power and the second refrigerant compression part 450a driven by refrigerant expansion energy of the refrigerant expansion part, the boil-off gas reliquefaction system can be designed for low capacity while enabling increase in capacity by constructing equipment units in parallel or replacing each equipment unit through individual increase in size of each equipment unit when a large capacity refrigerant cycle is required. Redundancy required by a vessel can be optionally considered for each equipment unit, thereby enabling cost reduction. In addition, power consumption for refrigerant compression can be reduced by utilizing refrigerant expansion energy of the refrigerant expansion part.

In the boil-off gas reliquefaction system according to the second embodiment shown in FIG. 2, the refrigerant, which is discharged after being expanded and cooled in the refrigerant expansion part 500b and used as a cold heat source in the heat exchanger, is introduced into the first refrigerant compression part 400b, which is driven by receiving refrigerant expansion energy from the refrigerant expansion part, is further compressed through the second refrigerant compression part 450b, which is driven by external energy, and is then introduced into the heat exchanger 200 to be pre-cooled. The pre-cooled refrigerant is expanded and cooled in the refrigerant expansion part 500b and circulated back as a cold heat source to the heat exchanger 200. The boil-off gas reliquefaction system according to the second embodiment differs from the boil-off gas reliquefaction system according to the first embodiment in that the refrigerant expansion part 500b transfers expansion energy of the refrigerant to the first refrigerant compression part 400b. Like the first embodiment, the boil-off gas reliquefaction system according to the second embodiment can be designed for low capacity while enabling increase in capacity by constructing equipment units in parallel or replacing each equipment unit through individual increase in size of each equipment unit when a large capacity refrigerant cycle is required.

In the embodiments of the present invention, the boil-off gas reliquefaction system is provided with a refrigerant inventory part RS that supplies the refrigerant circulating in the refrigerant circulation line CLa; CLb, a refrigerant supply line SLa; SLb that extends from the refrigerant inventory part to an upstream side of the first refrigerant compression part 400a, 400b of the refrigerant circulation line to replenish the refrigerant to the refrigerant circulation line, and a refrigerant discharge line ELa; ELb that extends from a downstream side of the second refrigerant compression part 450a, 450b of the refrigerant circulation line to the refrigerant inventory part to discharge the refrigerant of the refrigerant circulation line.

By replenishing the refrigerant from the refrigerant inventory or discharging some of the refrigerant to the refrigerant inventory to change the flow rate of the refrigerant, the amount of cold heat in the refrigerant circulation line and the load of the reliquefaction cycle can be adjusted.

More specifically, when requirement for cold heat of the re-liquefaction cycle is increased through increase in amount of the compressed gas to be reliquefied through the reliquefaction line RL, the refrigerant in the refrigerant circulation line may be replenished to the upstream side (low pressure part) of the first refrigerant compression unit through the refrigerant supply line SLa; SLb to increase the mass flow rate. Conversely, when requirement for cold heat of the re-liquefaction cycle is decreased through decrease in amount of the compressed gas to be reliquefied, the load of the re-liquefaction cycle can be adjusted by discharging some of the refrigerant in the refrigerant circulation line from the downstream side (high pressure part) of the second refrigerant compression part to the refrigerant inventory part through the refrigerant discharge line ELa; ELb to reduce the mass flow rate.

Although some embodiments have been disclosed herein, it should be understood that the invention is not limited thereto and may be implemented in various modifications or variations without departing from the technical spirit of the invention, as will become apparent to a person having ordinary knowledge in the art.

## Claims

1. A boil-off gas reliquefaction system for a vessel, comprising:
a compressor provided to the vessel and compressing boil-off gas generated in a storage tank storing liquefied gas;
a reliquefaction line extending from the compressor to the storage tank and reliquefying compressed gas to deliver the reliquefied gas to the storage tank;
a heat exchanger provided to the reliquefaction line and receiving and cooling the compressed gas;
a first refrigerant compression part compressing a refrigerant discharged from the heat exchanger after cooling the compressed gas;
a second refrigerant compression part further compressing the refrigerant compressed in the first refrigerant compression part; and
a refrigerant expansion part expanding and cooling the refrigerant compressed through the first and second refrigerant compression parts and supplying the refrigerant to the heat exchanger,
wherein the refrigerant compressed through the first and second refrigerant compression parts is pre-cooled in the heat exchanger, expanded and cooled in the refrigerant expansion part, and supplied as a cold heat source to the heat exchanger, and
wherein the first refrigerant compression part or the second refrigerant compression part is driven by expansion energy of the refrigerant delivered from the refrigerant expansion part.

2. The boil-off gas reliquefaction system according to claim 1, wherein four streams are heat exchanged in the heat exchanger, the four streams comprising a stream of uncompressed boil-off gas to be supplied from the storage tank to the compressor, a stream of the compressed gas through the compressor, a stream of the refrigerant compressed through the first and second refrigerant compression parts, and a stream of the refrigerant expanded and cooled through the refrigerant expansion part.

3. The boil-off gas reliquefaction system according to claim 2, wherein the second refrigerant compression part is driven by expansion energy of the refrigerant delivered from the refrigerant expansion part to compress the refrigerant.

4. The boil-off gas reliquefaction system according to claim 2, wherein the first refrigerant compression part is driven by expansion energy of the refrigerant delivered from the refrigerant expansion part to compress the refrigerant.

5. The boil-off gas reliquefaction system according to claim 3 or 4, further comprising:
a refrigerant circulation line to which the first and second refrigerant compression parts and the refrigerant expansion part are provided and in which the refrigerant supplied to the heat exchanger circulates; and
a refrigerant inventory part supplying the refrigerant circulating in the refrigerant circulation line.

6. The boil-off gas reliquefaction system according to claim 5, further comprising:
a refrigerant supply line extending from the refrigerant inventory part to an upstream side of the first refrigerant compression part of the refrigerant circulation line to replenish the refrigerant to the refrigerant circulation line; and
a refrigerant discharge line extending from a downstream side of the second refrigerant compression part of the refrigerant circulation line to the refrigerant inventory part to discharge the refrigerant of the refrigerant circulation line.

7. The boil-off gas reliquefaction system according to claim 6, wherein a load of a reliquefaction cycle is adjusted by replenishing the refrigerant to the refrigerant circulation line through the refrigerant supply line upon increase in amount of the compressed gas to be reliquefied, and discharging the refrigerant from the refrigerant circulation line through the refrigerant discharge line upon decrease in amount of the compressed gas to be reliquefied.

8. The boil-off gas reliquefaction system according to claim 6, further comprising:
a boil-off gas supply line extending from the storage tank to the compressor through the heat exchanger; and
a preheater branched upstream of the heat exchanger in the boil-off gas supply line to heat all or part of the boil-off gas and supply the heated boil-off gas to an upstream side of the heat exchanger in the boil-off gas supply line.

9. The boil-off gas reliquefaction system according to claim 6, wherein the boil-off gas compressed in the compressor is supplied as fuel to an engine or generator of the vessel and the boil-off gas not suppled as fuel is reliquefied through the reliquefaction line.

10. A boil-off gas reliquefaction method of a vessel, comprising;
compressing a boil-off gas generated from an on-board storage tank in a compressor; and
cooling a compressed gas through heat exchange with a refrigerant in a heat exchanger to re-liquefy,
wherein the refrigerant discharged from the heat exchanger after cooling the compressed gas is compressed through a first refrigerant compression part and a second compression part, is pre-cooled in the heat exchanger, is expanded and cooled in a refrigerant expansion part, and is circulated back as a cold heat source to the heat exchanger, and
wherein the first refrigerant compression part or the second refrigerant compression part is driven by expansion energy of the refrigerant delivered from the refrigerant expansion part.

11. The boil-off gas reliquefaction method according to claim 10, wherein four streams are heat exchanged in the heat exchanger, the four streams comprising a stream of uncompressed boil-off gas to be supplied from the storage tank to the compressor, a stream of the compressed gas through the compressor, a stream of the refrigerant compressed through the first and second refrigerant compression parts, and a stream of the refrigerant expanded and cooled through the refrigerant expansion part.

12. The boil-off gas reliquefaction method according to claim 10 or 11, wherein a load of a reliquefaction cycle is adjusted by replenishing the refrigerant from a refrigerant inventory part to an upstream side of the first refrigerant compression part upon increase in amount of the compressed gas to be reliquefied, and discharging the refrigerant from a downstream side of the second refrigerant compression part to the refrigerant inventory part upon decrease in amount of compressed gas to be reliquefied.
